# EUROPEAN PATENT APPLICATION

(11) **EP 4 390 748 A1**
(43) Date of publication of application: **26.06.2024**
(21) Application number: 23217567.9
(22) Date of filing: 18.12.2023
(51) Int. Cl.: G06F 30/38, G06F 30/39, G06F 111/20, G06F 117/12, G06F 119/20

(54) **METHOD FOR DESIGNING INTEGRATED CIRCUIT LAYOUT BY USING ANALOG/MIXED-SIGNAL STANDARD CELLS THAT DO NOT VIOLATE LAYOUT RULES OF DIGITAL STANDARD CELLS AND ASSOCIATED COMPUTER SYSTEM**

(30) Priority: 21.12.2022 US 202263476391 P; 28.11.2023 US 202318522162
(71) Applicant: MediaTek Inc., Hsin-Chu 300 (TW)
(72) Inventor: CHIN, Pang-Yen, 30078 Hsinchu City (TW); LIN, Yu-Sian, 30078 Hsinchu City (TW); ZENG, Ri-Cheng, 30078 Hsinchu City (TW); CHENG, Chi-Shun, 30078 Hsinchu City (TW); TSENG, Wei-Hsin, 30078 Hsinchu City (TW); CHEN, Kuan-Ta, 30078 Hsinchu City (TW); HU, Chia-Hsin, 30078 Hsinchu City (TW)
(74) Representative: Haseltine Lake Kempner LLP

(57) **Abstract**

A method for designing an integrated circuit layout includes: generating an analog standard cell library and designing the integrated circuit layout by using at least the analog standard cell library, where the step of generating the analog standard cell library includes creating a target analog standard cell that is included in the analog standard cell library and does not violate layout rules of digital standard cells. Another method for designing an integrated circuit layout includes: generating a mixed-signal standard cell library and designing the integrated circuit layout by using at least the mixed-signal standard cell library, where the step of generating the mixed-signal standard cell library includes creating a target mixed-signal standard cell that is included in the mixed-signal standard cell library and does not violate layout rules of digital standard cells.

## Description

This application claims the benefit of U.S. Provisional Application No. 63/476,391, filed on December 21st, 2022. The content of the application is incorporated herein by reference.

### Background

The present invention relates to an integrated circuit design, and more particularly, to a method for designing an integrated circuit layout by using analog/mixed-signal standard cells that do not violate layout rules of digital standard cells (e.g., analog/mixed-signal standard cells that are derived from digital standard cells) and an associated computer system.

Digital circuits are usually designed at the gate level by using digital standard cells that are typically optimized full-custom layouts provided by the manufacturer/foundry for better power/performance/area (PPA), especially in an advanced process. Analog/mixed-signal circuits, however, are designed at the transistor level without having optimized layouts, which offers more options to design at the cost of large area and power dissipation. Compared to the digital circuit design, the analog/mixed-signal circuit design is less efficient but more flexible. The analog/mixed-signal circuits may share some common functions, including switches, comparators, unit capacitors, etc. Thus, there is a need for innovative analog/mixed-signal standard cells that can provide optimized layouts for these common functions of analog/mixed-signal circuits, and can allow cell-based design methodology applied to digital circuits to be also applied to analog/mixed-signal circuits.

### Summary

One of the objectives of the claimed invention is to provide a method for designing an integrated circuit layout by using analog/mixed-signal standard cells that do not violate layout rules of digital standard cells (e.g., analog/mixed-signal standard cells that are derived from digital standard cells) and an associated computer system.

According to a first aspect of the present invention, an exemplary method for designing an integrated circuit layout is disclosed. The exemplary method includes: generating an analog standard cell library, comprising: creating a target analog standard cell that is included in the analog standard cell library and does not violate layout rules of digital standard cells; and designing the integrated circuit layout by using at least the analog standard cell library.

According to a second aspect of the present invention, an exemplary method for designing an integrated circuit layout is disclosed. The exemplary method includes: generating a mixed-signal standard cell library, comprising: creating a target mixed-signal standard cell that is included in the mixed-signal standard cell library and does not violate layout rules of digital standard cells; and designing the integrated circuit layout by using at least the mixed-signal standard cell library.

According to a third aspect of the present invention, an exemplary method for designing an integrated circuit layout is disclosed. The exemplary method includes: generating a mixed-signal standard cell library, comprising: creating a mixed-signal standard cell included in the mixed-signal standard cell library through laying a passive component above or below a digital standard cell included in a digital standard cell library; and designing the integrated circuit layout by using at least the mixed-signal standard cell library.

According to a fourth aspect of the present invention, an exemplary computer system is disclosed. The exemplary computer system includes a storage device and a processor. The storage device is arranged to store a program code, a digital standard cell library, an analog standard cell library, and a mixed-signal standard cell library, wherein the analog standard cell library and the mixed-signal standard cell library comprise at least one analog standard cell and at least one mixed-signal standard cell that do not violate layout rules of digital standard cells. The processor is arranged to load and execute the program code for designing an integrated circuit layout by using standard cells selected from at least one of the digital standard cell library, the analog standard cell library, and the mixed-signal standard cell library.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a computer system according to an embodiment of the present invention.
FIG. 2 is a diagram illustrating a dynamic amplifier standard cell (which is an analog standard cell) that is created from modifying a layout of a 2-input NAND standard cell (which is a digital standard cell) according to an embodiment of the present invention.
FIG. 3 is a diagram illustrating a transform between circuits of a 2-input NAND and a dynamic amplifier according to an embodiment of the present invention.
FIG. 4 is a diagram illustrating a transmission gate switch standard cell (which is an analog standard cell) that is created from modifying a layout of an inverter standard cell (which is a digital standard cell) according to an embodiment of the present invention.
FIG. 5 is a diagram illustrating a transform between circuits of an inverter and a transmission gate switch according to an embodiment of the present invention.
FIG. 6 is a diagram illustrating a tri-state inverter standard cell (which is a mixed-signal standard cell) that is created from modifying a layout of an inverter standard cell (which is a digital standard cell) according to an embodiment of the present invention.
FIG. 7 is a diagram illustrating a transform between circuits of an inverter and a tri-state inverter according to an embodiment of the present invention.
FIG. 8 is a diagram illustrating a mixed-signal standard cell with a High-R resistor laid above a Tap cell (which is a digital standard cell) according to an embodiment of the present invention.
FIG. 9 is a diagram illustrating a mixed-signal standard cell with an MOM capacitor laid above a Filler cell (which is a digital standard cell) according to an embodiment of the present invention.
FIG. 10 is a diagram illustrating a mixed-signal standard cell with a circular inductor laid above a Boundary cell (which is a digital standard cell) according to an embodiment of the present invention.
FIG. 11 is a diagram illustrating an integrated circuit layout with a compact arrangement of analog, mixed-signal and digital standard cells according to an embodiment of the present invention.
FIG. 12 is a diagram illustrating a single MMOS standard cell (which is an analog standard cell) that is created from modifying a layout of an inverter standard cell according to an embodiment of the present invention.
FIG. 13 is a diagram illustrating a transform between circuits of an inverter and a single NMOS transistor according to an embodiment of the present invention.
FIG. 14 is a diagram illustrating a single PMOS standard cell (which is an analog standard cell) that is created from modifying a layout of an inverter standard cell according to an embodiment of the present invention.
FIG. 15 is a diagram illustrating a transform between circuits of an inverter and a single PMOS transistor according to an embodiment of the present invention.
FIG. 16 is a diagram illustrating an analog standard cell with a High-R resistor laid above a single NMOS standard cell (which is an analog standard cell that does not violate layout rules of digital standard cells) according to an embodiment of the present invention.
FIG. 17 is a diagram illustrating a resistor digital-to-analog converter unit according to an embodiment of the present invention.
FIG. 18 is a diagram illustrating a mixed-signal standard cell with an MOM capacitor laid above a tri-state inverter standard cell (which is a mixed-signal standard cell that does not violate layout rules of digital standard cells) according to an embodiment of the present invention.
FIG. 19 is a diagram illustrating a tri-state inverter with a decoupling capacitor according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

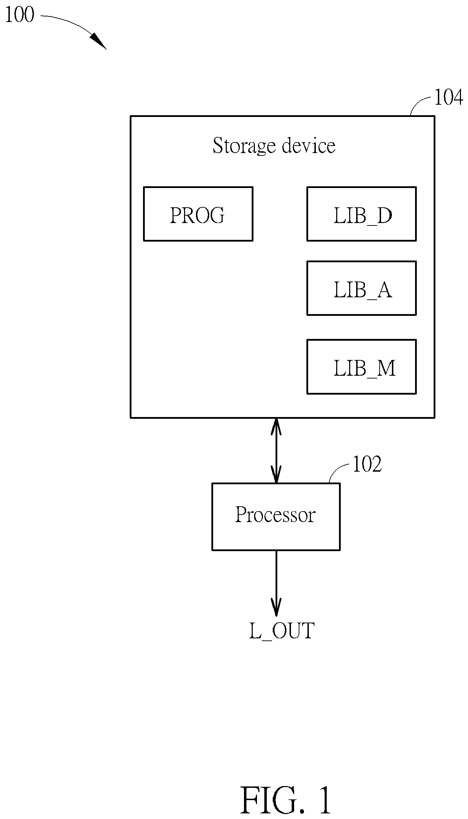

FIG. 1 is a diagram illustrating a computer system according to an embodiment of the present invention. The computer system 100 may include a processor 102 and a storage device 104. For example, the processor 102 may be a general-purpose processor or any circuit with instruction execution capability, and the storage device 104 may be a memory, a hard disk, or any circuit with data storage capability. The storage device 104 is arranged to store a program code PROG, a digital standard cell library LIB_D, an analog standard cell library LIB_A, and a mixed-signal standard cell library LIB_M. In some embodiments of the present invention, the analog standard cell library LIB_A includes one or more analog standard cells that do not violate layout rules of digital standard cells that are specified by the manufacturer/foundry, and the mixed-signal standard cell library LIB_M includes one or more mixed-signal standard cells that do not violate layout rules of digital standard cells that are specified by the manufacturer/foundry. Digital standard cells are typically optimized full-custom layouts provided by the manufacturer/foundry for better PPA. When the layout rules of digital standard cells also apply to analog/mixed-signal standard cells, the analog/mixed-signal standard cells that satisfy the layout rules of digital standard cells can benefit from advantages (e.g., better PPA) brought by the layout rules of digital standard cells. In some embodiments of the present invention, each standard cell included in the analog standard cell library LIB_A and the mixed-signal standard cell library LIB_M may be derived from a digital standard cell included in the digital standard cell LIB_D. For example, the digital standard cell library LIB_D is in compliance with FinFET technology. Typically, custom analog/mixed-signal devices are required to be separated from digital standard cells provided by the manufacturer/foundry. However, in an advanced process, this boundary between an analog/mixed-signal device and a digital standard cell may be indistinct.

The present invention proposes a new analog/mixed-signal-function standard cell that can be realized based on a digital standard cell with/without layout modification. In this embodiment, the digital standard cell LIB_D is provided from the manufacturer/foundry, and each standard cell included in the analog standard cell library LIB_A and the mixed-signal standard cell library LIB_M does not violate a design rule check (DRC) of the manufacturer/foundry. Specifically, any P-channel metal-oxide-semiconductor (PMOS) transistor and/or N-channel metal-oxide-semiconductor (NMOS) transistor used in the analog/mixed-signal standard cell is directly inherited/created from the digital standard cell, and is not a custom design created at the transistor level. However, this is for illustrative purposes only, and is not meant to be limitations of the present invention. As long as the new analog/mixed-signal-function standard cells do not violate layout rules of digital standard cells, the new analog/mixed-signal-function standard cells can benefit from advantages (e.g., better PPA) brought by the layout rules of digital standard cells. A first approach may create new analog/mixed-signal-function standard cells from scratch under a condition that layout rules of digital standard cells are not violated. For example, layouts of digital standard cells may be referenced by the designer during a process of designing layouts of new analog/mixed-signal-function standard cells. A second approach may derive the new analog/mixed-signal-function standard cells from digital standard cells with/without layout modification. The second approach is a more convenient and faster approach compared to the first approach. No matter which of the first approach and the second approach is adopted, the same objective of generating the new analog/mixed-signal-function standard cells that do not violate layout rules of digital standard cells is achieved. For better comprehension of technical features of the present invention, several examples of new analog/mixed-signal-function standard cells obtained by the second approach are provided as below. It should be noted that an analog/mixed-signal standard cell means an analog/mixed-signal function can be reused or combined with functions of other circuits, and the definition of the analog/mixed-signal function may vary according to designer's requirement. Hence, the new analog/mixed-signal standard cells shown in the accompanying drawings are for illustrative purposes only, and are not meant to be limitations of the present invention.

The program code PROG may be a computer-aided design (CAD) tool used by electronic design automation (EDA). Hence, the processor 102 is arranged to load and execute the program code PROG for designing an integrated circuit layout L_OUT by using standard cells selected from at least one of the digital standard cell library LIB_D, the analog standard cell library LIB_A, and the mixed-signal standard cell library LIB_M. Further details of deriving the analog standard cell library LIB_A and the mixed-signal standard cell library LIB_M from the digital standard cell library LIB_D are described as below with reference to the accompanying drawings.

In a first exemplary design, an analog standard cell included in the analog standard cell library LIB_A does not violate layout rules of digital standard cells as specified by the manufacturer/foundry. For example, the analog standard cell included in the analog standard cell library LIB_A is created through modifying a layout of a digital standard cell included in the digital standard cell library LIB_D to enable an analog function. Specifically, PMOS transistor(s) and/or NMOS transistor(s) in a digital standard cell are reused by the analog standard cell, and interconnections between terminals of PMOS transistor(s) and/or NMOS transistor(s) are properly modified to achieve the analog function of the analog standard cell.

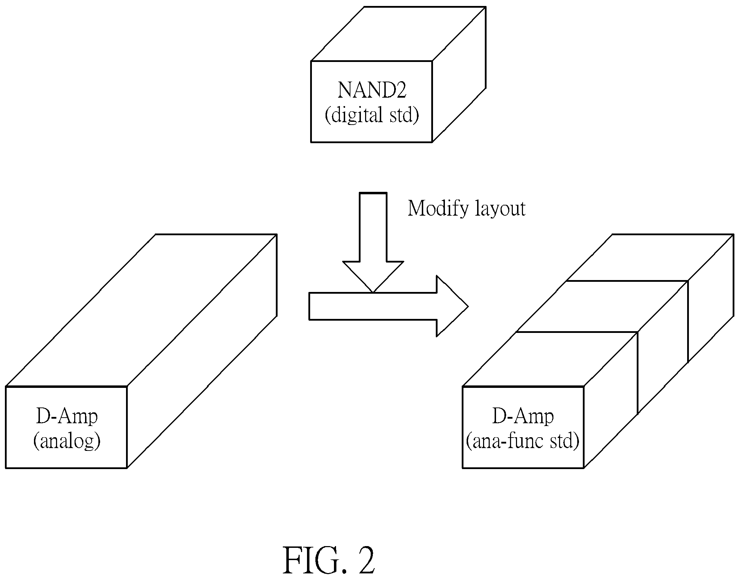

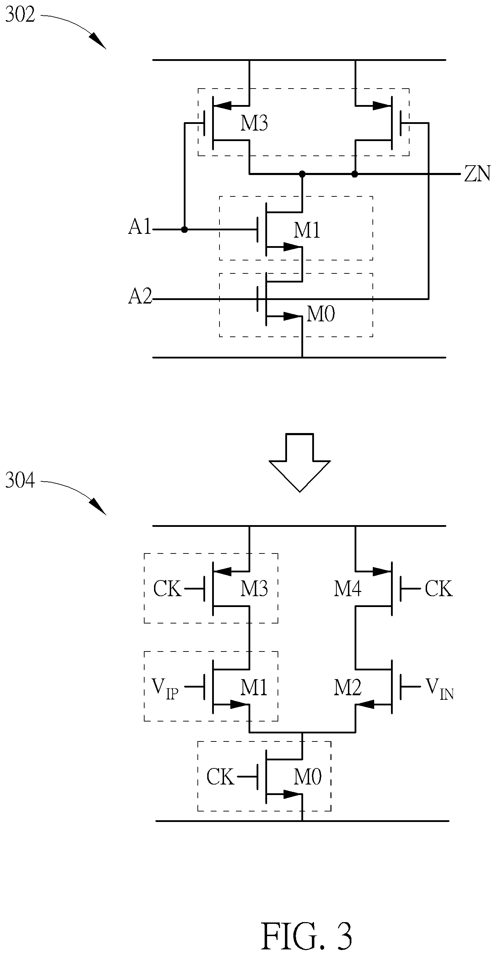

FIG. 2 is a diagram illustrating a dynamic amplifier standard cell D-Amp (ana-func std) that is created from modifying a layout of a 2-input NAND standard cell NAND2 (digital std) according to an embodiment of the present invention, where the dynamic amplifier standard cell D-Amp (ana-func std) is an analog standard cell (labeled by "ana-func std") with an analog function that is the same as that of a custom analog device D-Amp (analog) designed at the transistor level, and the 2-input NAND standard cell NAND2 (digital std) is a digital standard cell. FIG. 3 is a diagram illustrating a transform between circuits of a 2-input NAND 302 and a dynamic amplifier 304 according to an embodiment of the present invention, where the 2-input NAND 302 is designed with the use of the 2-input NAND standard cell NAND2 (digital std), and the dynamic amplifier 304 is designed with the use of one or more dynamic amplifier standard cells D-Amp (ana-func std). The analog function of the dynamic amplifier 304 is realized through modifying a standard cell layout of the 2-input NAND 304. For example, the layout modification applied to the 2-input NAND standard cell NAND2 (digital std) for creating the dynamic amplifier standard cell D-Amp (ana-func std) may include gate cut achieved by CM0/CP0 layer, gate TIEH/L achieved by BVG layer, drain/source cut achieved by CMD layer, and drain/source TIEH/L achieved by VD/MO layer.

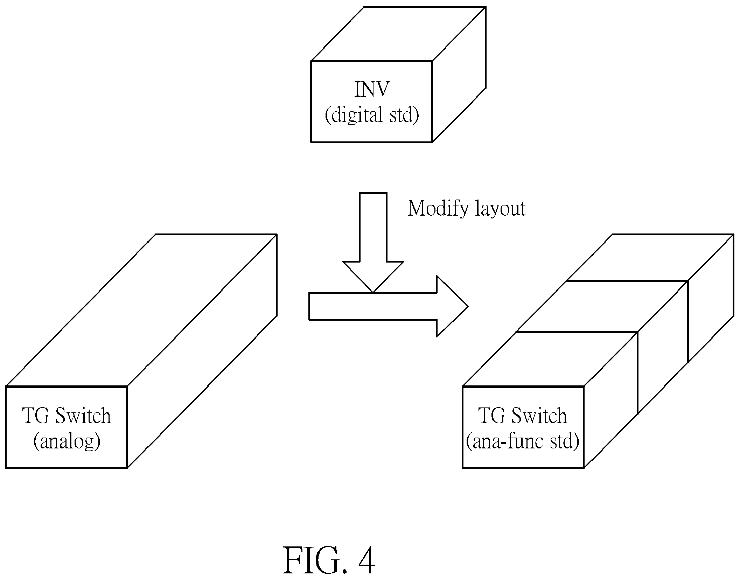

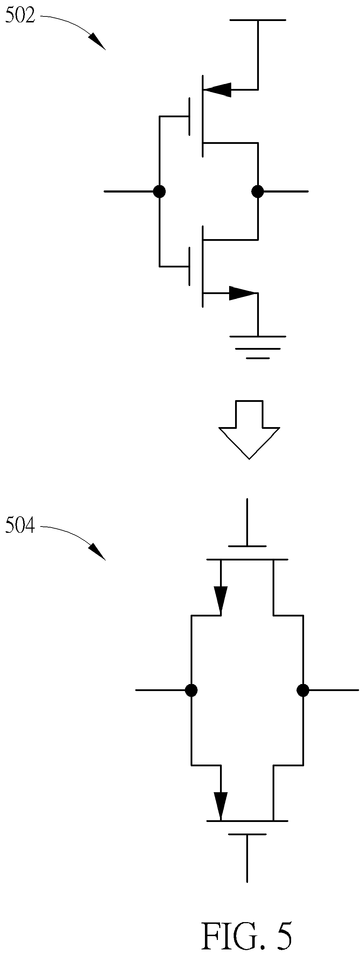

FIG. 4 is a diagram illustrating a transmission gate switch standard cell TG Switch (ana-func std) that is created from modifying a layout of an inverter standard cell INV (digital std) according to an embodiment of the present invention, where the transmission gate switch standard cell TG Switch (ana-func std) is an analog standard cell with an analog function that is the same as that of a custom analog device TG Switch (analog) designed at the transistor level, and the inverter standard cell INV (digital std) is a digital standard cell. FIG. 5 is a diagram illustrating a transform between circuits of an inverter 502 and a transmission gate switch 504 according to an embodiment of the present invention, where the inverter 502 is designed with the use of the inverter standard cell INV (digital std), and the transmission gate switch 504 is designed with the use of one or more transmission gate switch standard cells TG Switch (ana-func std). The analog function of the transmission gate switch 504 is realized through modifying a standard cell layout of the inverter 502.

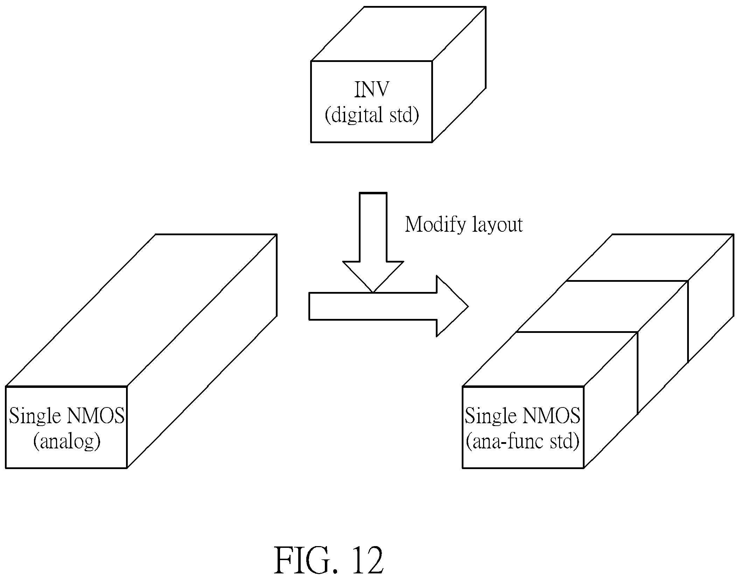

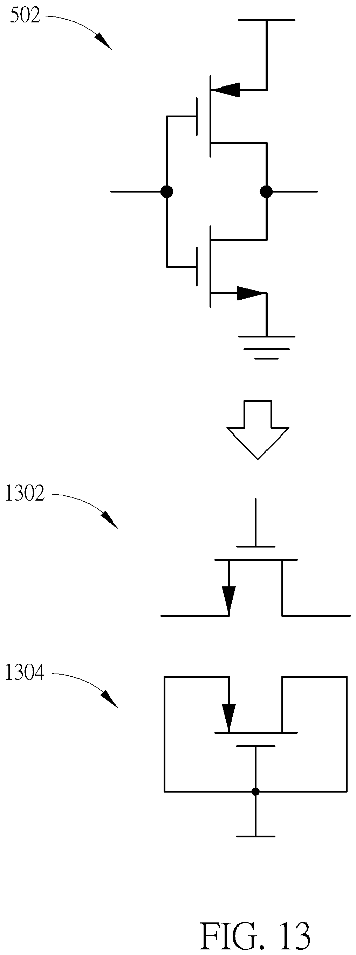

FIG. 12 is a diagram illustrating a single MMOS standard cell (ana-func std) that is created from modifying a layout of an inverter standard cell INV (digital std) according to an embodiment of the present invention, where the single MMOS standard cell (ana-func std) is an analog standard cell with an analog function that is the same as that of a custom NMOS transistor (analog) designed at the transistor level, and the inverter standard cell INV (digital std) is a digital standard cell. FIG. 13 is a diagram illustrating a transform between circuits of an inverter 502 and a single NMOS transistor 1302 according to an embodiment of the present invention, where the inverter 502 is designed with the use of the inverter standard cell INV (digital std), and the single NMOS transistor 1302 is designed with the use of single MMOS standard cell (ana-func std). The analog function of the single MMOS transistor 1302 is realized through modifying a standard cell layout of the inverter 502, where a PMOS transistor of the inverter 502 may be configured as a dummy device (or a MOS capacitor) 1304, depending upon an actual layout design of the single MMOS standard cell (ana-func std).

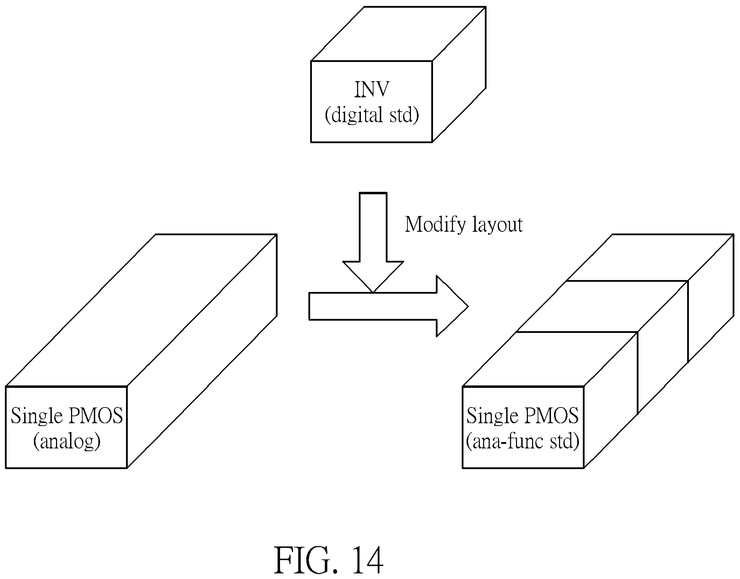

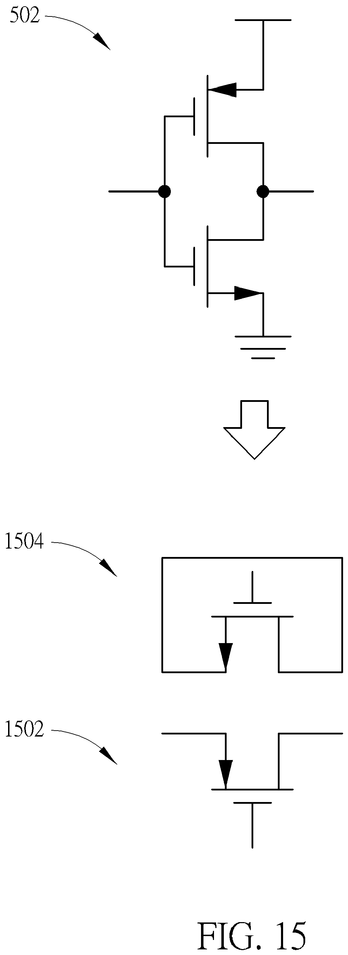

FIG. 14 is a diagram illustrating a single PMOS standard cell (ana-func std) that is created from modifying a layout of an inverter standard cell INV (digital std) according to an embodiment of the present invention, where the single PMOS standard cell (ana-func std) is an analog standard cell with an analog function that is the same as that of a custom PMOS transistor (analog) designed at the transistor level, and the inverter standard cell INV (digital std) is a digital standard cell. FIG. 15 is a diagram illustrating a transform between circuits of an inverter 502 and a single PMOS transistor 1502 according to an embodiment of the present invention, where the inverter 502 is designed with the use of the inverter standard cell INV (digital std), and the single PMOS transistor 1502 is designed with the use of single PMOS standard cell (ana-func std). The analog function of the single PMOS transistor 1502 is realized through modifying a standard cell layout of the inverter 502, where an NMOS transistor of the inverter 502 may be configured as a dummy device (or a MOS capacitor) 1504, depending upon an actual layout design of the single PMOS standard cell (ana-func std).

In a second exemplary design, a mixed-signal standard cell included in the mixed-signal standard cell library LIB_M does not violate layout rules of digital standard cells as specified by the manufacturer/foundry. For example, the mixed-signal standard cell included in the mixed-signal standard cell library LIB_M is created through modifying a layout of a digital standard cell included in the digital standard cell library LIB_D to enable a mixed-signal function. Specifically, PMOS transistor(s) and/or NMOS transistor(s) in a digital standard cell are reused by the mixed-signal standard cell, and interconnections between terminals of PMOS transistor(s) and/or NMOS transistor(s) are properly modified to achieve the mixed-signal function of the mixed-signal standard cell.

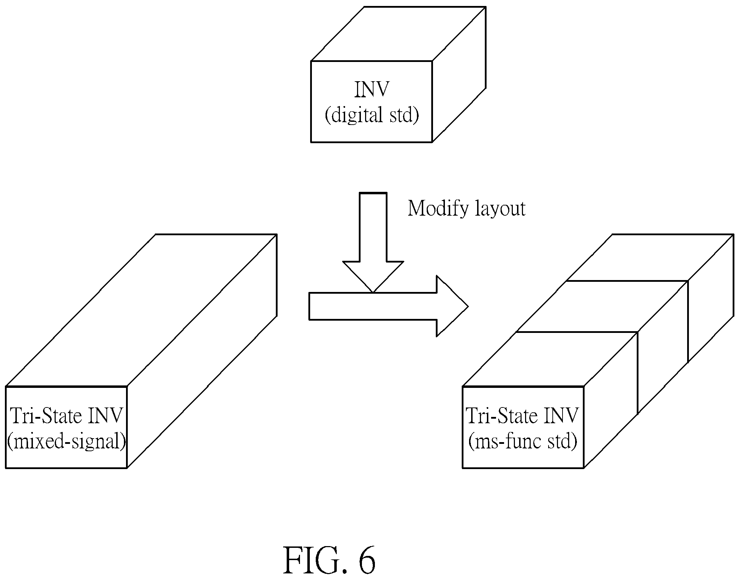

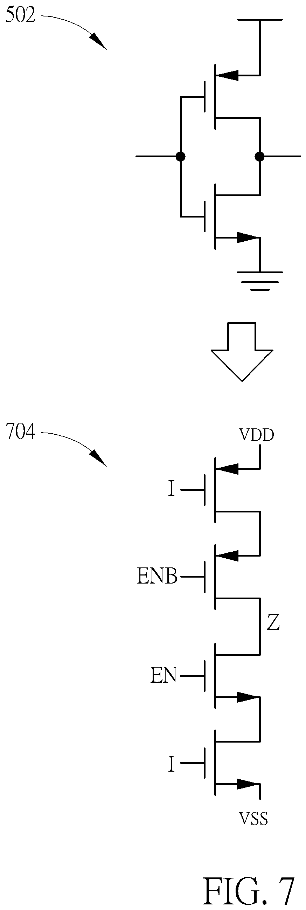

FIG. 6 is a diagram illustrating a tri-state inverter standard cell Tri-State INV (ms-func std) that is created from modifying a layout of an inverter standard cell INV (digital std) according to an embodiment of the present invention, where the tri-state inverter standard cell Tri-State INV (ms-func std) is a mixed-signal standard cell (labeled by "ms-func std") with a mixed-signal function that is the same as that of a custom mixed-signal device Tri-State (mixed-signal) designed at the transistor level, and the inverter standard cell INV (digital std) is a digital standard cell. FIG. 7 is a diagram illustrating a transform between circuits of an inverter 502 and a tri-state inverter 704 according to an embodiment of the present invention, where the inverter 502 is designed with the use of the inverter standard cell INV (digital std), and the tri-state inverter 704 is designed with the use of one or more tri-state inverter standard cells Tri-State INV (ms-func std). The mixed-signal function of the tri-state inverter 704 is realized through modifying a standard cell layout of the inverter 502. For example, the layout modification applied to the inverter standard cell INV (digital std) for creating the tri-state inverter standard cell Tri-State INV (ms-func std) may include cutting poly, cutting/connecting the MD layer, and adding a pin.

In a third exemplary design, a mixed-signal standard cell included in the mixed-signal standard cell library LIB_M does not violate layout rules of digital standard cells as specified by the manufacturer/foundry. For example, the mixed-signal standard cell included in the mixed-signal standard cell library LIB_M is created through laying a passive component above or below a digital standard cell included in the digital standard cell library LIB_D, without modifying a layout of the digital standard cell. Specifically, the mixed-signal standard cell may be regarded as a combination of the passive component and the digital standard cell (which retains its digital function), such that an analog function of the mixed-signal standard cell is realized by the passive component, and a digital function of the mixed-signal standard cell is realized by the digital function of the digital standard cell. For example, the passive component may be a high-resistance (High-R) resistor, a metal-oxide-metal (MOM) capacitor, or a circular inductor.

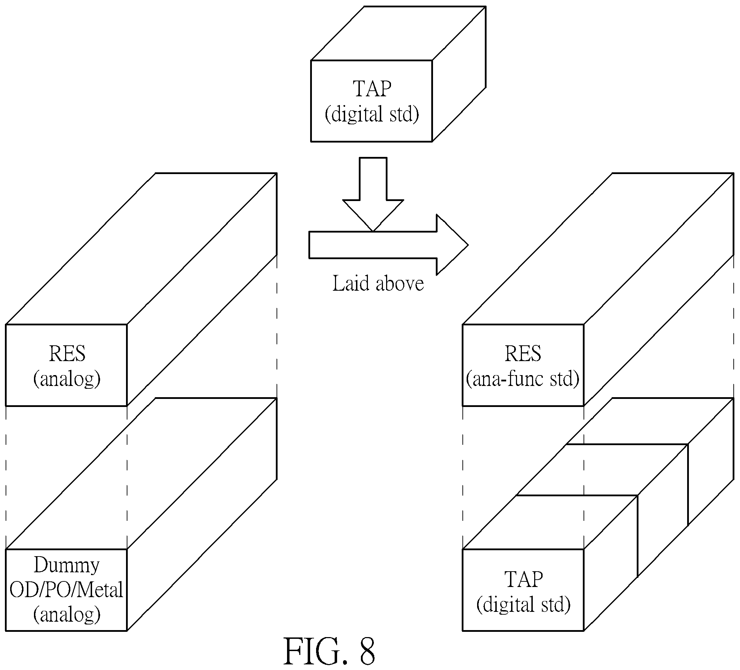

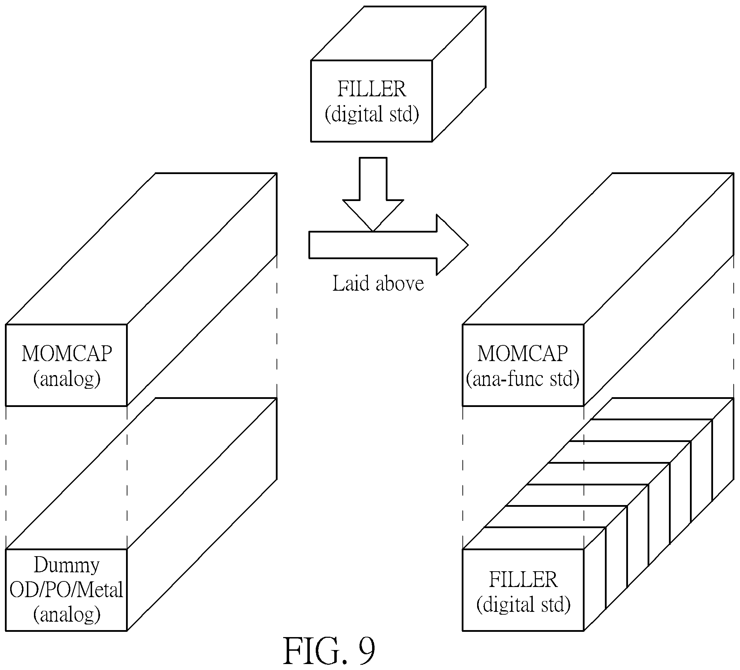

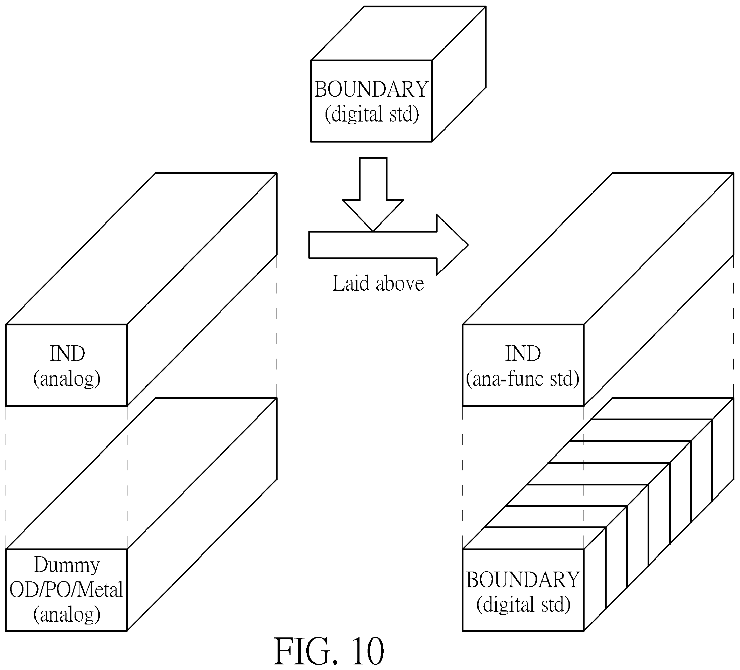

FIG. 8 is a diagram illustrating a mixed-signal standard cell with a High-R resistor RES (ana-func std) laid above a tap cell TAP (digital std) according to an embodiment of the present invention, where the tap cell TAP (digital std) is a digital standard cell, and the High-R resistor RES (ana-func std) is the same as the High-R resistor RES (analog) that is typically laid above dummy oxide (OD) /poly (PO)/metal used in a custom analog device. FIG. 9 is a diagram illustrating a mixed-signal standard cell with an MOM capacitor MOMCAP (ana-func std) laid above a filler cell FILLER (digital std) according to an embodiment of the present invention, where the filler cell FILLER (digital std) is a digital standard cell, and the MOM capacitor MOMCAP (ana-func std) is the same as the MOM capacitor MOMCAP (analog) that is typically laid above dummy OD/PO/metal used in a custom analog device. FIG. 10 is a diagram illustrating a mixed-signal standard cell with a circular inductor IND (ana-func std) laid above a boundary cell BOUNDARY (digital std) according to an embodiment of the present invention, where the boundary cell BOUNDARY (digital std) is a digital standard cell, and the circular inductor IND (ana-func std) is the same as the circular inductor IND (analog) that is typically laid above dummy OD/PO/metal used in a custom analog device. It should be noted that the filler/tap/boundary cell is for illustrative purposes only, and is not meant to be a limitation of the present invention. In practice, the filler/tap/boundary cell may be replaced with any suitable digital standard cell as long as the mixed-signal standard cell does not violate DRC of manufacturer/foundry.

In a fourth exemplary design, a mixed-signal standard cell included in the mixed-signal standard cell library LIB_M does not violate layout rules of digital standard cells as specified by the manufacturer/foundry. For example, the mixed-signal standard cell included in the mixed-signal standard cell library LIB_M is created through laying a passive component (e.g., resistor, capacitor, or inductor) above or below an analog standard cell included in the analog standard cell library LIB_A. Specifically, a mixed-signal standard cell is created by modifying a layout of a digital standard cell to create an analog standard cell, and laying a passive component above or below the analog standard cell. By way of example, but not limitation, the filler, tap, boundary cell shown in FIG. 8, FIG. 9, FIG. 10 may be replaced with the dynamic amplifier/transmission gate switch cell shown in FIG. 2, FIG. 4.

In a fifth exemplary design, an analog/mixed-signal standard cell included in the analog/mixed-signal standard cell library LIB_A/LIB_M does not violate layout rules of digital standard cells as specified by the manufacturer/foundry. For example, the analog/mixed-signal standard cell included in the analog/mixed-signal standard cell library LIB_A/LIB_M is created through laying a passive component (e.g., resistor, capacitor, or inductor) above or below an analog/mixed-signal standard cell that does not violate layout rules of digital standard cells (e.g., an analog/mixed-signal standard cell that is derived from a digital standard cell with/without layout modification).

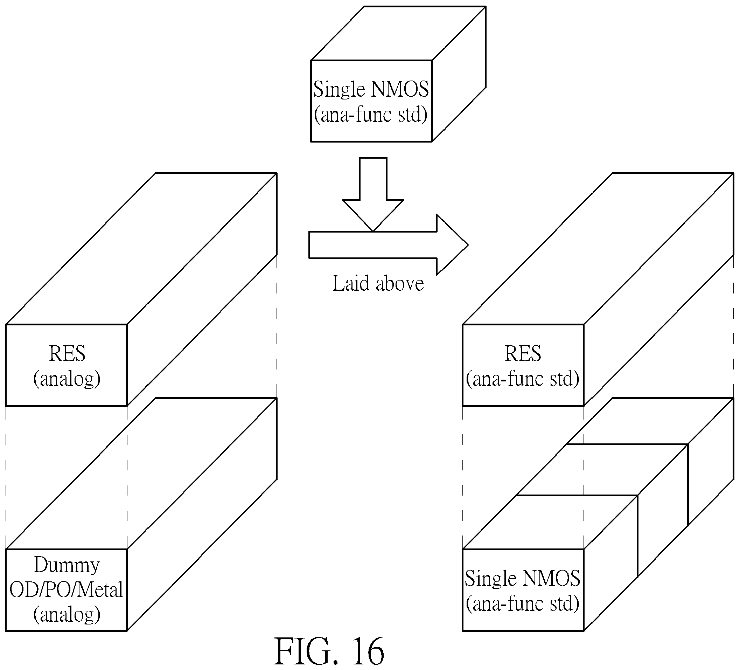

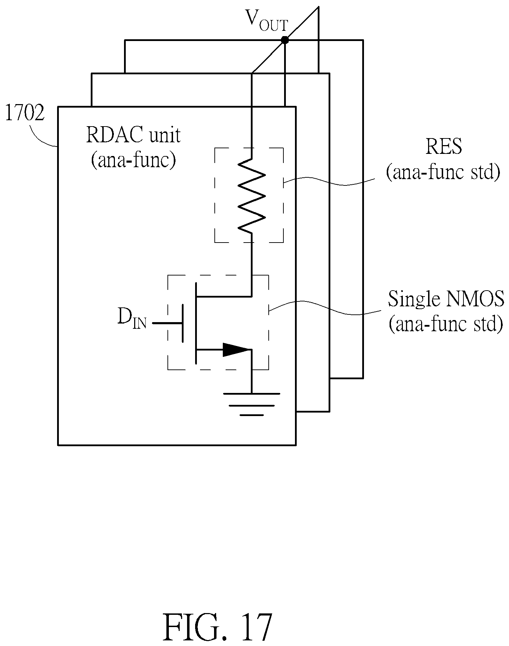

FIG. 16 is a diagram illustrating an analog standard cell with a High-R resistor RES (ana-func std) laid above a single NMOS standard cell (ana-func std) according to an embodiment of the present invention. For example, the single NMOS standard cell (ana-func std) may be created from modifying a layout of an inverter standard cell INV (digital std), as illustrated in FIG. 12. In some embodiments of the present invention, a resistor digital-to-analog converter (RDAC) unit 1702 shown in FIG. 17 may be designed with the use of the analog standard cell (which has a High-R resistor RES (ana-func std) laid above a single NMOS standard cell (ana-func std)) shown in FIG. 16.

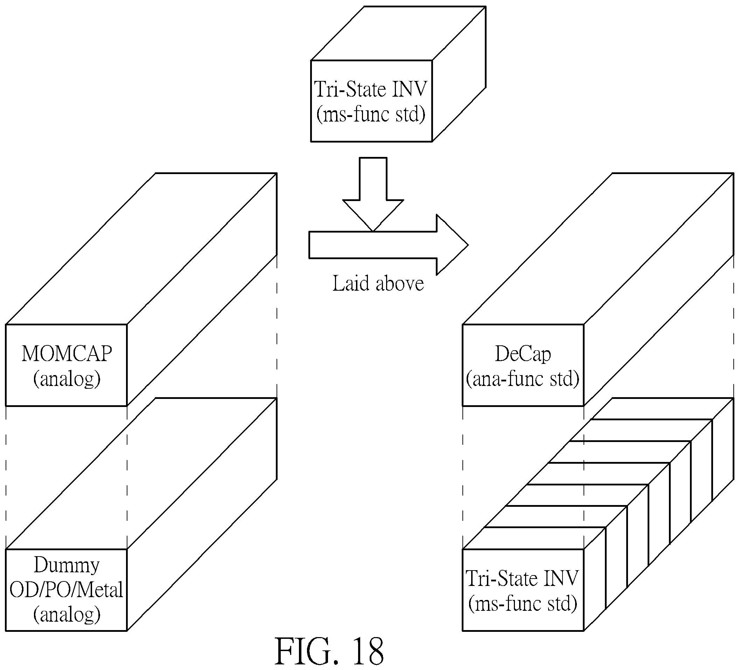

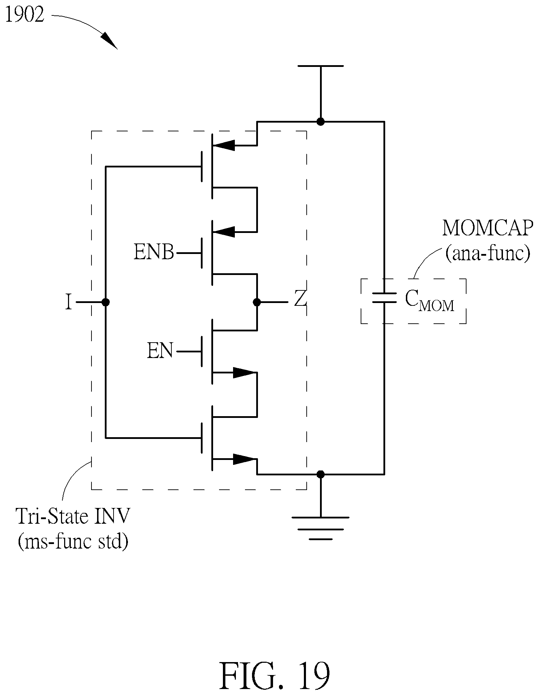

FIG. 18 is a diagram illustrating a mixed-signal standard cell with an MOM capacitor MOMCAP (ana-func std) laid above a Tri-State INV standard cell (ms-func std) according to an embodiment of the present invention. For example, the Tri-State INV standard cell (ms-func std) may be created from modifying a layout of an inverter standard cell INV (digital std), as illustrated in FIG. 6, and the MOM capacitor MOMCAP (ana-func std) may act as a decoupling capacitor (DeCap) laid above the Tri-State INV standard cell (ms-func std). In some embodiments of the present invention, a tri-state inverter with DeCap 1902 shown in FIG. 19 may be designed with the use of the mixed-signal standard cell (which has an MOM capacitor MOMCAP (ana-func std) laid above a Tri-State INV standard cell (ms-func std)) shown in FIG. 18.

As mentioned above, each standard cell included in the analog standard cell library LIB_A and the mixed-signal standard cell library LIB_M is derived from a digital standard cell included in the digital standard cell LIB_D. Hence, all standard cells included in the analog standard cell library LIB_A, the mixed-signal standard cell library LIB_M, and the digital standard cell LIB_D are equal in height. In addition, the analog/mixed-signal standard cells realized by the method of the present invention can be designed, placed and routed together with digital standard cells without violating the design rules. Hence, the cell-based design methodology can be applied to digital circuits as well as analog and mixed-signal circuits. For example, considering a case where the digital standard cell library LIB_D is in compliance with FinFET technology, there are no floorplan boundaries needed between analog, mixed-signal and digital standard cells in the advanced FinFET process, which enables the integrated circuit design to gain higher speed and more power efficiency.

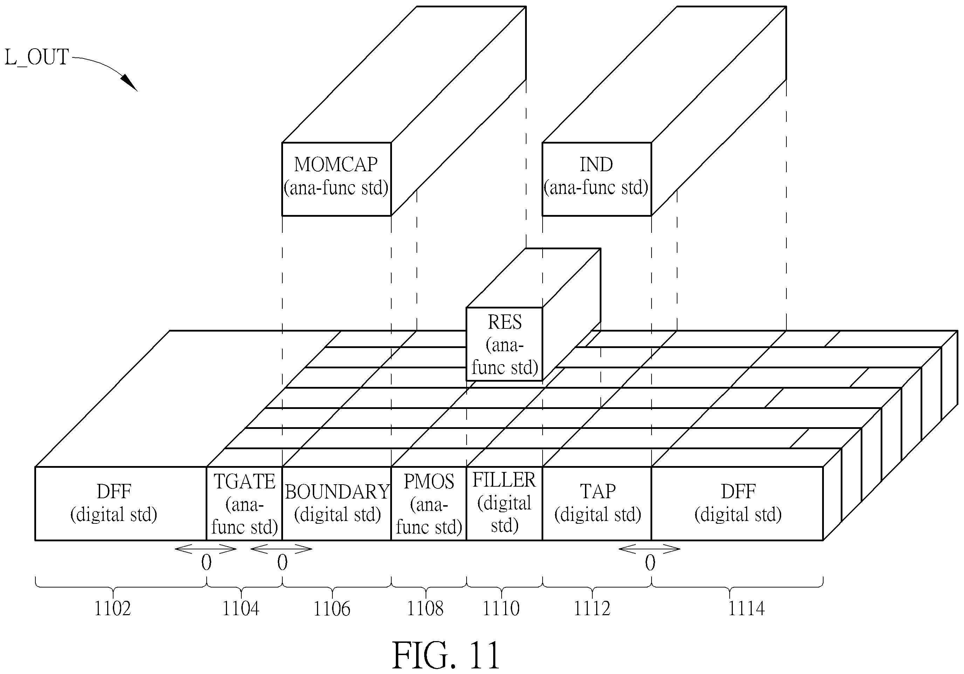

FIG. 11 is a diagram illustrating the integrated circuit layout L_OUT with a compact arrangement of analog, mixed-signal and digital standard cells according to an embodiment of the present invention. In this embodiment, the digital standard cells 1102, 1114, the analog standard cells 1104, 1108, and the mixed-signal standard cells 1106, 1110, 1112 abut each other with zero boundaries (labeled by "0"). For example, regarding the integrated circuit layout L_OUT shown in FIG. 11, one analog standard cell 1104 selected from the analog standard cell library LIB_A and one digital standard cell 1102 selected from the digital standard cell library LIB_A abut each other, one mixed-signal standard cell 1112 selected from the mixed-signal standard cell library LIB_M and one digital standard cell 1114 selected from the digital standard cell library LIB_D abut each other, and one analog standard cell 1104 selected from the analog standard cell library LIB_A and one mixed-signal standard cell 1106 selected from the mixed-signal standard cell library LIB_M abut each other.

Those skilled in the art will readily observe that numerous modifications and alterations of the device and method may be made while retaining the teachings of the invention. Accordingly, the above disclosure should be construed as limited only by the metes and bounds of the appended claims.

The present invention may also be defined by the following numbered clauses.
1. A method for designing an integrated circuit layout, comprising:
   generating an analog standard cell library, comprising:
      creating a target analog standard cell that is included in the analog standard cell library and does not violate layout rules of digital standard cells; and
   designing the integrated circuit layout by using at least the analog standard
      cell library.
2. The method of clause 1, wherein creating the target analog standard cell comprises:
   creating an analog standard cell through modifying a layout of a digital standard cell included in a digital standard cell library;
   wherein the target analog standard cell is derived from the analog standard cell.
3. The method of clause 2, wherein creating the target analog standard cell further comprises:
   laying a passive component above or below the analog standard cell to create the target analog standard cell.
4. The method of clause 3, wherein the passive component is one of a resistor, a capacitor, and an inductor.
5. The method of clause 2, wherein the digital standard cell library is in compliance with FinFET technology.
6. The method of clause 2, wherein the integrated circuit layout comprises the target analog standard cell selected from the analog standard cell library and one digital standard cell selected from the digital standard cell library that abut each other.
7. A method for designing an integrated circuit layout, comprising:
   generating a mixed-signal standard cell library, comprising:
      creating a target mixed-signal standard cell that is included in the mixed-signal standard cell library and does not violate layout rules of digital standard cells; and
   designing the integrated circuit layout by using at least the mixed-signal standard cell library.
8. The method of clause 7, wherein creating the target mixed-signal standard cell comprises:
   creating a mixed-signal standard cell through modifying a layout of a digital standard cell included in a digital standard cell library;
   wherein the target mixed-signal standard cell is derived from the mixed-signal standard cell.
9. The method of clause 8, wherein creating the target mixed-signal standard cell further comprises:
   laying a passive component above or below the mixed-signal standard cell to create the target mixed-signal standard cell.
10. The method of clause 9, wherein the passive component is one of a resistor, a capacitor, and an inductor.
11. The method of clause 8, wherein the digital standard cell library is in compliance with FinFET technology.
12. The method of clause 8, wherein the integrated circuit layout comprises the target mixed-signal standard cell selected from the mixed-signal standard cell library and one digital standard cell selected from the digital standard cell library that abut each other.
13. The method of clause 8, wherein creating the mixed-signal standard cell through modifying the layout of the digital standard cell included in the digital standard cell library comprises:
   modifying the layout of the digital standard cell to create an analog standard cell; and
   laying a passive component above or below the analog standard cell to create the mixed-signal standard cell.
14. The method of claus 13, wherein the passive component is one of a resistor, a capacitor, and an inductor.
15. A method for designing an integrated circuit layout, comprising:
   generating a mixed-signal standard cell library, comprising:
      creating a mixed-signal standard cell included in the mixed-signal standard cell library through laying a passive component above or below a digital standard cell included in a digital standard cell library; and
   designing the integrated circuit layout by using at least the mixed-signal standard cell library.
16. The method of clause 15, wherein the digital standard cell library is in compliance with FinFET technology.
17. The method of claus 15, wherein the integrated circuit layout comprises the mixed-signal standard cell selected from the analog standard cell library and one digital standard cell selected from the digital standard cell library that abut each other.
18. The method of claus 15, wherein the passive component is one of a resistor, a capacitor, and an inductor.
19. A computer system comprising:
   a storage device, arranged to store a program code, a digital standard cell library, an analog standard cell library, and a mixed-signal standard cell library, wherein the analog standard cell library and the mixed-signal standard cell library comprise at least one analog standard cell and at least one mixed-signal standard cell that do not violate layout rules of digital standard cells; and
   a processor, arranged to load and execute the program code for designing an integrated circuit layout by using standard cells selected from at least one of the digital standard cell library, the analog standard cell library, and the mixed-signal standard cell library.
20. The computer system of clause 19, wherein each of the at least one analog standard cell and the at least one mixed-signal standard cell is derived from a digital standard cell included in the digital standard cell library.
21. The computer system of clause 19, wherein the integrated circuit layout comprises one analog standard cell selected from the at least one analog standard cell included in the analog standard cell library and one digital standard cell selected from the digital standard cell library that abut each other.
22. The computer system of claus 19, wherein the integrated circuit layout comprises one mixed-signal standard cell selected from the at least one mixed-signal standard cell included in the mixed-signal standard cell library and one digital standard cell selected from the digital standard cell library that abut each other.
23. The computer system of clause 19, wherein the integrated circuit layout comprises one analog standard cell selected from the at least one analog standard cell included in the analog standard cell library and one mixed-signal standard cell selected from the at least one mixed-signal standard cell included in the mixed-signal standard cell library that abut each other.

## Claims

1. A method for designing an integrated circuit layout, comprising:
generating an analog standard cell (1104, 1108) library, comprising:
creating a target analog standard cell (1104, 1108) that is included in the analog standard cell (1104, 1108) library and does not violate layout rules of digital standard cells (1102, 1114); and
designing the integrated circuit layout by using at least the analog standard cell (1104, 1108) library.

2. The method of claim 1, wherein creating the target analog standard cell (1104, 1108) comprises:
creating an analog standard cell (1104, 1108) through modifying a layout of a digital standard cell (1102, 1114) included in a digital standard cell (1102, 1114) library;
wherein the target analog standard cell (1104, 1108) is derived from the analog standard cell (1104, 1108).

3. The method of claim 2, wherein creating the target analog standard cell (1104, 1108) further comprises:
laying a passive component above or below the analog standard cell (1104, 1108) to create the target analog standard cell (1104, 1108).

4. The method of claim 3, wherein the passive component is one of a resistor, a capacitor, and an inductor.

5. The method of claim 2, wherein the digital standard cell (1102, 1114) library is in compliance with FinFET technology.

6. The method of claim 2, wherein the integrated circuit layout comprises the target analog standard cell (1104, 1108) selected from the analog standard cell (1104, 1108) library and one digital standard cell (1102, 1114) selected from the digital standard cell (1102, 1114) library that abut each other.

7. A computer system (100) comprising:
a storage device (104), arranged to store a program code, a digital standard cell (1102, 1114) library, an analog standard cell (1104, 1108) library, and a mixed-signal standard cell (1106, 1110, 1112) library, wherein the analog standard cell (1104, 1108) library and the mixed-signal standard cell (1106, 1110, 1112) library comprise at least one analog standard cell (1104, 1108) and at least one mixed-signal standard cell (1106, 1110, 1112) that do not violate layout rules of digital standard cells (1102, 1114); and
a processor (102), arranged to load and execute the program code for designing an integrated circuit layout by using standard cells selected from at least one of the digital standard cell (1102, 1114) library, the analog standard cell (1104, 1108) library, and the mixed-signal standard cell (1106, 1110, 1112) library.

8. The computer system (100) of claim 7, wherein each of the at least one analog standard cell (1104, 1108) and the at least one mixed-signal standard cell (1106, 1110, 1112) is derived from a digital standard cell (1102, 1114) included in the digital standard cell (1102, 1114) library.

9. The computer system (100) of claim 7, wherein the integrated circuit layout comprises one analog standard cell (1104, 1108) selected from the at least one analog standard cell (1104, 1108) included in the analog standard cell (1104, 1108) library and one digital standard cell (1102, 1114) selected from the digital standard cell (1102, 1114) library that abut each other.

10. The computer system (100) of claim 7, wherein the integrated circuit layout comprises one mixed-signal standard cell (1106, 1110, 1112) selected from the at least one mixed-signal standard cell (1106, 1110, 1112) included in the mixed-signal standard cell (1106, 1110, 1112) library and one digital standard cell (1102, 1114) selected from the digital standard cell (1102, 1114) library that abut each other.

11. The computer system (100) of claim 7, wherein the integrated circuit layout comprises one analog standard cell (1104, 1108) selected from the at least one analog standard cell (1104, 1108) included in the analog standard cell (1104, 1108) library and one mixed-signal standard cell (1106, 1110, 1112) selected from the at least one mixed-signal standard cell (1106, 1110, 1112) included in the mixed-signal standard cell (1106, 1110, 1112) library that abut each other.
